# EUROPÄISCHE PATENTANMELDUNG

(11) **EP 0 641 816 A1**
(43) Veröffentlichungstag der Anmeldung: **08.03.1995**
(21) Anmeldenummer: 94112725.0
(22) Anmeldetag: 16.08.1994
(51) Int. Cl.: C08G 69/18, C08K 3/34

(54) **Verfahren zur Herstellung von gefülltem und/oder verstärktem Gusspolyamid**

(30) Priorität: 27.08.1993 DE 4328882
(71) Anmelder: BAYER AG, 51368 Leverkusen (DE)
(72) Erfinder: Grigat, Ernst, Dr., D-51381 Leverkusen (DE); Fahnler, Friedrich, Dipl.-Ing., D-47807 Krefeld (DE); Cramer, Wilfried, Dr., D-51061 Köln (DE)

(57) **Zusammenfassung**

Die Erfindung betrifft ein Verfahren zur Herstellung von Gußpolyamid.

## Beschreibung

Die Erfindung betrifft ein Verfahren zur Herstellung von Gußpolyamid.

Neben der hydrolytischen Polykondensation kann man Polyamid auch durch anionische Polymerisation herstellen. Die anionische Polymerisation bietet den Vorteil, daß die Monomer- und Additivschmelze bereits in die fertige Form gebracht und dann polymerisiert werden kann (Gußpolyamid). Auf diese Weise ist das Herstellen von Formteilen möglich, die weder durch Spritzguß noch durch Blasformen oder andere thermoplastische Verfahren hergestellt werden können. Ein wesentlicher Unterschied dieses Verfahrens gegenüber der thermoplastischen Verarbeitung ist, daß alle Additive bereits während der Polymerisation vorhanden sein müssen, da ein Einbringen nach der Polymerisation nicht mehr möglich ist. Aus verarbeitungstechnischen Gründen ist es dabei sehr vorteilhaft, wenn sämtliche Additive zusammen mit der Schmelze in die Form eingebracht werden, um zusätzliche Bearbeitungsschritte, etwa das Einlegen von Glasfasermatten, zu vermeiden.

Glasfaserverstärktes Gußpolyamid ist bekannt. Die Herstellung erfolgte bisher über eine Schmelzeverdickung durch Einbringen von Polymeren. Das hat gegenüber dem erfindungsgemäßen Verfahren jedoch die gravierenden Nachteile, daß man einerseits etwa die doppelte Menge an Zusatzstoffen einbringen muß. Andererseits benötigt man eine erhebliche Zeitspanne und hohe Temperaturen zur Vorbereitung der Schmelze. Das Lösen der Polymeren in Lactam dauert ca. 1 bis 4 Stunden, je nach Polymer und Korngröße bei ca. 150°C. Erfindungsgemäß erfolgt das Aufschmelzen in wenigen Minuten bei ca. 120°C.

Der Einsatz von Thixotropiermitteln als solcher ist bekannt (siehe beispielsweise Karsten: "Lackrohstoff-Tabellen", 5. Aufl., Curt R. Vincentz Verlag, Hannover, 1967). Jedoch wird der Einsatz zum Thixotropieren von Lactam-Gemischen, vor allem zum Zweck der Herstellung von gefülltem und/oder verstärkten Gußpolyamid, nicht gelehrt. Ganz im Gegenteil bestand die Erwartung, daß die gegenüber Fremdstoffen und anderen Veränderungen, wie den thixotropen Effekt als solchen, sehr empfindliche anionische Polymerisation stark gestört oder ganz verhindert wird.

Gegenstand der Erfindung ist ein Verfahren zur Herstellung von glasfaserverstärktem Gußpolyamid, dadurch gekennzeichnet, daß die zur Polymerisation vorgesehenen Schmelzen in den thixotropen Zustand versetzt werden und dann zur Polymerisation gebracht werden.

Überraschenderweise stellte sich jedoch heraus, daß der Einsatz von bestimmten Thixotropiermitteln die Polymerisation nur geringfügig stört und in den üblichen Polymerisationsapparaturen für Gußpolyamid gut verarbeitbar ist.

Außerdem bietet die Thixotropierung deutliche Vorteile bei der Herstellung von gefülltem und/oder verstärktem Gußpolyamid gegenüber bekannten Verfahren. Die übliche, bekannte, aktivierte anionische Polymerisation von Lactamen zu Polyamiden wird in technischem Maßstab z.B. so durchgeführt, daß man einerseits eine Lösung von Katalysator in Lactam und andererseits eine Lösung von Aktivator in Lactam herstellt., Beide Lösungen sind so zusammengesetzt, daß ein Zusammengeben im gleichen Verhältnis die gewünschte Gesamtrezeptur ergibt.

Man kann ebenso andere Zusammensetzungen wählen, beispielsweise eine konzentrierte Aktivator- sowie Katalysatorschmelze zu einer Lactamschmelze dosieren. Die weiteren Additive können je nach Verträglichkeiten in die Aktivator-, Katalysator- oder gegebenenfalls Lactamschmelze gegeben werden.

Nach dem erfindungsgemäßen Verfahren werden jedoch die einzelnen Schmelzekomponenten in den thixotropen Zustand versetzt, bevor die eigentliche Gußpolymerisation durchgeführt wird.

Die erfindungsgemäße Thixotropierung wird z.B. so ausgeführt, daß man für jede Schmelzekomponente Lactam unter Luftausschluß aufschmilzt, durch Zugabe von 1 bis 6 Gew.-%, bevorzugt 2 bis 4 Gew.-% des Thixotropiermittels, bezogen auf die Summe aus Lactam und Aktivator (Lactamat) und Katalysator (Polyamidbestandteile), und Dispergieren mit beispielsweise einem Hochgeschwindigkeitsrührer oder Dispergator thixotropiert und dann unter Rühren mit einem normalen Rührwerk 3 bis 30 Gew.-%, bevorzugt 8 bis 18 Gew.-% Füll- oder Verstärkungsstoffe, bevorzugt Glasfasern, ebenfalls bezogen auf die Summe aus Lactam und Aktivator und Katalysator, sowie gegebenenfalls weitere Additive, zugibt.

Eine andere Möglichkeit zur Durchführung des erfindungsgemäßen Verfahrens ist es beispielsweise, unter Beibehalt der genannten Mengenangaben, die Füll- und Verstärkungsstoffe zusammen mit dem Thixotropiermittel zu dispergieren und danach unter Rühren mit einem normalen Rührwerk die andere Additive einzurühren. Auf diese Weise erhält man z.B. eine gleichmäßigere Glasfaserverteilung im hergestellten Polyamid.

Wesentlich ist, daß die einzelnen Schmelzkomponenten vor der Zusammenführung zur Polymerisation in den thixotropierten Zustand versetzt und die Additive gleichmäßig verteilt wurden.

Die Gußpolymerisationsapparatur sollte bevorzugt für jede Schmelze einzeln einen Schmelzkreislauf bis zum Gußkopf besitzen, durch den die Schmelze in den Schläuchen und Leitungen durch ständiges Umpumpen in Bewegung gehalten wird. Für die Ausführung des erfindungsgemäßen Verfahrens ist dieser Kreislauf jedoch nicht zwingend notwendig.

Als Thixotropiermittel kommen bekannte anorganische sowie organische Thixotropiermittel in Frage, soweit sie die Reaktionsfähigkeit des Gußpolyamidsystems nicht oder nur unwesentlich beeinträchtigen. Eine unwesentliche Beeinträchtigung ist es beispielsweise, wenn die Katalysator- und/oder Aktivatormenge nicht mehr als verdoppelt werden muß, um die gleichen Reaktionszeiten wie ein nicht thixotropiertes Gußpolyamidsystem aufzuweisen.

Thixotropiermittel sind anorganische Silikate, bevorzugt, Silikat-Aluminiumoxid-Gemische mit Hauptbestandteil Silikat (mit sehr niedriger Stampfdichte (< 170 g/l, bevorzugt < 80 g/l, nach DIN ISO 787/XI).

Als Lactame kommen cyclische Lactame mit 6 bis 12 C-Atomen in Frage, bevorzugt Laurinlactam und besonders bevorzugt ε-Caprolactam.

Füll- oder Verstärkungsstoffe im erfindungsgemäßen Sinn sind Mineralien in für Thermoplastanwendungen üblicher Korngröße wie beispielsweise Kaolin, Kreide, Wollastonit oder Talkum oder Glasfasern, darunter bevorzugt (z.B. gemahlene) Glasfasern (milled fiber). Als Schlichte für die Füll- oder Verstärkungsstoffe kann die gleiche Schlichte wie für den Einsatz im compoundierten Polyamid verwendet werden.

Der Katalysator im erfindungsgemäßen Sinne ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne können N-Acyllactame oder Säurechloride oder, bevorzugt, aliphatische Isocyanate, besonders bevorzugt Oligomere des Hexamethylendiisocyanats sein. Als Aktivator kann sowohl die Reinsubstanz wie auch bevorzugt eine Lösung, beispielsweise in N-Methylpyrrolidon, dienen.

Weitere Additive können beispielsweise Schlagzähmodifikatoren, Flammschutzmittel, Nukleierungshilfsmittel, Farbstoffe, Füllöle, Stabilisatoren, Oberflächenverbesserer und Entformungshilfsmittel sein.

Ein weiterer Gegenstand der Erfindung ist ebenfalls eine gefüllte und/oder verstärkte Polyamidkomposition, hergestellt durch anionische Polymerisation einer Mischung aus
a) 40 bis 95 Gew.-% cyclischem Lactam mit 6 bis 15 Kohlenstoffatomen im Ring, bevorzugt Laurinlactam und besonders bevorzugt ε-Caprolactam, oder Mischungen dieser Lactame,
b) 0,8 bis 8 Gew-% Katalysator, bevorzugt eine Mischung von etwa 15 bis 20 Gew.-% Lactamatsalz, darunter bevorzugt Natriumlactamat, in ε-Caprolactam,
c) 0,5 bis 5 Gew.-% Aktivator, bevorzugt aliphatische Isocyanate oder N-Acyllactame,
d) 0,5 bis 5 Gew.-% Thixotropiermittel, bevorzugt Silikate oder Silikat-Aluminiumoxid-Gemische, die zum Erreichen der Thixotropierwirkung entsprechend eingearbeitet, bevorzugt eindispergiert, werden,
e) 1 bis 50 Gew.-%, bevorzugt 3 bis 30 Gew.-%, besonders bevorzugt 5 bis 15 Gew.-% Füll- und Verstärkungsstoffe, bevorzugt Glasfasern, darunter bevorzugt gemahlene Glasfasern (milled fibers),
f) 0 bis 20 Gew-% andere Additive wie beispielsweise Schlagzähmodifikatoren oder Nukleierungsmittel.

### Beispiele

Als Katalysator diente eine 18 +/- 1 Gew.-%ige Lösung von Natriumlactamat in ε-Caprolactam, der Aktivator war ein Oligomeres des Hexamethylendiisocyanat, gelöst in N-Methylpyrrolidon.

Das Thixotropiermittel war eine Mischung eines Silikates mit hochdispersem Aluminiumoxid 5:1 mit einer Stampfdichte nach DIN ISO 787/XI von 50 g/l, zum Thixotropieren wurde ein Ultraturrax T 25® der Fa. Jahnke & Kunkel, Ika Labortechnik, Staufen i. Br., verwendet.

Es wird 1 Minute bei mittlerer und 1 Minute bei höchster Drehzahl gerührt.

Die Polymerisationszeiten sind witterungsabhängig, an Tagen mit hoher Luftfeuchte dauert die Polymerisation etwas länger.

Von jedem auspolymerisierten Polyamidblock wird oben und unten ein Stuck herausgesägt (ca. 5 g) und verascht (Bestimmung des Aschegehaltes bei 550°C nach DIN ISO R 247; es wird stets eine Doppelbestimmung angegeben).

### Beispiel 1

Katalysatorschmelze: Eine Mischung aus 306,0 g ε-Caprolactam und 10,8 g Thixotropiermittel werden bei 120°C thixotropiert. Dann werden 40,0 g gemahlene Glasfasern und 43,2 g Katalysator eingerührt.

Aktivatorschmelze: Eine Mischung aus 340,6 g ε-Caprolactam und 10,8 g Thixotropiermittel werden bei 120°C thixotropiert. Dann werden 40,0 g gemahlene Glasfasern und 8,6 g Aktivator eingerührt.

Beide Schmelzen werden in ein auf 180°C vorgeheiztes Becherglas (1 l, breite Form) gegossen, kurz durchgerührt, und nochmals in ein Becherglas (1 l, breite Form) gegossen, das in einem auf 180°C erwärmten Aluminiumblock steht, und auspolymerisieren gelassen. Nach ca. 3 bis 6 Minuten ist die Polymerisation so weit fortgeschritten, daß man einen Glasstab nicht mehr in die Masse stecken kann.

Man erhält einen homogenen Block.
Aschegehalt oben: 12,8 % / 12,8 %, unten: 12,9 / 12,9 %.

### Beispiel 2: 15 Gew.-% Glas

Katalysatorschmelze: Eine Mischung aus 251,9 g ε-Caprolactam und 9,1 g Thixotropiermittel werden bei 120°C thixotropiert. Dann werden 52,5 g gemahlene Glasfasern und 36,5 g Katalysator eingerührt.

Aktivatorschmelze: Eine Mischung aus 281,1 g ε-Caprolactam und 9,1 g Thixotropiermittel werden bei 120°C thixotropiert. Dann werden 52,5 g gemahlene Glasfasern und 7,3 g Aktivator eingerührt.

Beide Schmelzen werden in ein auf 180°C vorgeheiztes Becherglas (1 l, breite Form) gegossen, kurz durchgerührt, und nochmals in ein Becherglas (1 l, breite Form) gegossen, das in einem auf 180°C erwärmten Aluminiumblock steht, und auspolymerisieren gelassen. Nach ca. 3 bis 6 Minuten ist die Polymerisation so weit fortgeschritten, daß man einen Glasstab nicht mehr in die Masse stecken kann.

Man erhält einen homogenen Block.
Aschegehalt oben: 17,9 / 17,9 %, unten: 17,9 / 17,9 %

### Beispiel 3: 20 Gew.-% Glas

Katalysatorschmelze: Eine Mischung aus 298,8 g ε-Caprolactam und 10,8 g Thixotropiermittel werden bei 120°C thixotropiert. Dann werden 90,0 g gemahlene Glasfasern und 50,4 g Katalysator eingerührt.

Aktivatorschmelze: Eine Mischung aus 340,6 g ε-Caprolactam und 10,8 g Thixotropiermittel werden bei 120°C thixotropiert. Dann werden 90,0 g gemahlene Glasfasern und 8,6 g Aktivator eingerührt.

Beide Schmelzen werden in ein auf 180°C vorgeheiztes Becherglas (1 l, breite Form) gegossen, kurz durchgerührt, und nochmals in ein Becherglas (1 l, breite Form) gegossen, das in einem auf 180°C erwärmten Aluminiumblock steht, und auspolymerisieren gelassen. Nach ca. 3 bis 6 Minuten ist die Polymerisation so weit fortgeschritten, daß man einen Glasstab nicht mehr in die Masse stecken kann.

Man erhält einen homogenen Block
Aschegehalt oben: 22,8 / 22,9 %, unten: 22,9 / 22,9 %

### Beispiel 4: 25 Gew.-% Glas

Katalysatorschmelze: Eine Mischung aus 289,5 g ε-Caprolactam und 10,5 g Thixotropiermittel werden bei 120°C thixotropiert. Dann werden 116,7 g gemahlene Glasfasern und 49,0 g Katalysator eingerührt.

Aktivatorschmelze: Eine Mischung aus 331,1 g ε-Caprolactam und 10,5 g Thixotropiermittel werden bei 120°C thixotropiert. Dann werden 116,7 g gemahlene Glasfasern und 8,4 g Aktivator eingerührt.

Beide Schmelzen werden in ein auf 180°C vorgeheiztes Becherglas (1 l, breite Form) gegossen, kurz durchgerührt, und nochmals in ein Becherglas (1 l, breite Form) gegossen, das in einem auf 180°C erwärmten Aluminiumblock steht, und auspolymerisieren gelassen. Nach ca. 3 bis 6 Minuten ist die Polymerisation so weit fortgeschritten, daß man einen Glasstab nicht mehr in die Masse stecken kann.

Man erhält einen homogenen Block.
Aschegehalt oben: 27,3 / 27,4 %, unten: 27,3 / 27,6 %

### Beispiel 5: Ansatz für Gußpolyamid-Polymerisationsanlagee (15 % Glas)

Katalysatorschmelze: Eine Mischung aus 13887 g ε-Caprolactam und 459 g Thixotropiermittel werden bei 120°C thixotropiert. Dann werden 2700 g gemahlene Glasfasern und 1368 g Katalysator eingerührt.

Aktivatorschmelze: Eine Mischung aus 14474 g ε-Caprolactam und 459 g Thixotropiermittel werden bei 120°C thixotropiert (für diesen Ansatz wurde ein größeres Modell des genannten Ultraturrax verwendet). Dann werden 2700 g -gemahlene Glasfasern und 457 g Aktivator eingerührt.

Je 800 g beider Schmelzen werden durch einen Statikmischkopf in eine auf 160°C vorgeheizte Rotationsgußform (Hohlkörper mit ca. 10 l Inhalt) gepumpt und unter ständigem Rotieren auspolymerisieren gelassen. Nach ca. 3 Minuten ist die Polymerisation so weit fortgeschritten, daß man den Hohlkörper entformen kann. Man erhält einen Hohlkörper ausglasfaserverstärkten Polyamid mit gleichmäßiger Glasverteilung und für Gußpolyamid üblicher gleichmäßiger Wandstärke.

### Beispiel 6

Katalysatorschmelze: Eine Mischung aus 260,0 g ε-Caprolactam, 52,5 g gemahlenen Glasfasern und 7,5 g Thixotropiermittel werden bei 120°C thixotropiert. Dann werden 32,0 g Katalysator eingerührt.

Aktivatorschmelze: Eine Mischung aus 282,7 g ε-Caprolactam, 52,5 g gemahlenen Glasfasern und 7,5 g Thixotropiermittel werden bei 120°C thixotropiert. Dann werden 7,3 g Aktivator eingerührt.

Beide Schmelzen werden in ein auf 180°C vorgeheiztes Becherglas (1 l, breite Form) gegossen, kurz durchgerührt, und nochmals in ein Becherglas (1 l, breite Form) gegossen, das in einem auf 180°C erwärmten Aluminiumblock steht, und auspolymerisieren gelassen. Nach ca. 3 bis 5 Minuten ist die Polymerisation so weit fortgeschritten, daß man einen Glasstab nicht mehr in die Masse stecken kann.

Man erhält einen homogenen Block.
Aschegehalt oben: 17,2 / 17,3 %, unten: 17,4 / 17,7 %.

## Patentansprüche

1. Verfahren zur Herstellung von gefülltem und/oder verstärktem, bevorzugt glasfaserverstärktem, Gußpolyamid, dadurch gekennzeichnet, daß die zur Polymerisation vorgesehenen Schmelzen in den thixotropen Zustand versetzt werden und dann zur Polymerisation gebracht werden.

2. Verfahren nach Anspruch 1, dadurch gekennzeichnet, daß die Thixotropierung durch Zugabe eines Thixotropiermittels und Einarbeitung mit einem Hochgeschwindigkeitsrührer und/oder Dispergator geschieht.

3. Verfahren nach Anspruch 1, dadurch gekennzeichnet, daß als Thixotropiermittel Silikate eingesetzt werden.

4. Gefüllte und/oder verstärkte Polyamidkomposition, hergestellt durch anionische Polymerisation einer Mischung aus
a) 40 bis 95 Gew.-% cyclischem Lactam mit 6 bis 15 Kohlenstoffatomen im Ring,
b) 0,8 bis 8 Gew.-% Katalysator,
c) 0,5 bis 5 Gew.-% Aktivator,
d) 0,5 bis 5 Gew.-% Thixotropiermittel,
e) 1 bis 50 Gew.-% Füll- und Verstärkungsstoffe,
f) 0 bis 20 Gew.-% andere Additive wie Schlagzähmodifikatoren, Flammschutzmittel oder Nukleierungsmittel.
